# EUROPEAN PATENT APPLICATION

(11) **EP 1 865 243 A1**
(43) Date of publication of application: **12.12.2007**
(21) Application number: 07010626.5
(22) Date of filing: 29.05.2007
(51) Int. Cl.: F16L 19/065, F16L 19/08, F16L 19/12, F16L 33/32, F16L 47/04

(54) **Compression fitting, particularly for polyethylene pipes**

(30) Priority: 08.06.2006 IT MI20061109
(71) Applicant: Tecnovielle S.p.A., 25066 Lumezzane Pieve (BS) (IT)
(72) Inventor: Bontempi, Antonio, 25060 Collebeato (Prov. of Brescia) (IT); Gilberti, Alen, 25045 Castegnato (Prov. of Brescia) (IT)
(74) Representative: Alagem Modiano, Lara S.

(57) **Abstract**

A compression fitting (1), particularly for polyethylene pipes comprising a body (4) for receiving a pipe to be inserted therein, the body (4) having an external connecting thread (3), wherein the fitting (1) further comprises a locking nut (2), which can be coupled to the thread (3) of the body (4), means (20;22) for locking the pipe to be connected and sealing means (21), the locking means (20;22) and the sealing means (21) being provided by a single component (10).

## Description

The present invention relates to a compression fitting, particularly for polyethylene pipes, with simplified connection.

As is known, two types of fittings are currently used to connect polyethylene pipes in particular. The first type of fitting, made of brass or plastics, generally has a locking nut which engages a locking ring, which is made of metallic or plastic material, is placed around the pipe and is flanked by a gasket, generally made of rubber, which is arranged on the pipe and is accommodated in a fitting body onto which the locking nut is screwed.

The fitting body can be connected to another system of pipes/fittings by means of a male or female thread (if the material that constitutes the pipes/fittings is different from polyethylene) or by means of an identical locking system (double-ended fitting) in the case of polyethylene pipes/fittings both in input and in output with respect to the compression fitting.

With this embodiment, the fitting is typically provided with the components already assembled, and the user has to first of all perform disassembly in order to allow connection to the polyethylene pipe, inserting the polyethylene pipe in the fitting nut; then the locking ring is inserted on the polyethylene pipe, the rubber gasket is fitted on the polyethylene pipe, and the body of the fitting is screwed onto the locking nut.

The sequence of the operations described above must be performed in order to avoid damaging the gasket during the operations for assembling the fitting and the pipe.

With this embodiment, one does not always have an easy mutual approach of the body and the nut due to the considerable friction between the locking ring and the surface of the polyethylene pipe.

The other type of fitting entails providing a fitting with a locking nut which engages a locking ring which acts on a small or secondary ring which engages a sealing O-ring, which is accommodated within the body of the fitting.

In this case also, preliminary disassembly of the fitting is required due to the reasons described above and it is then necessary to insert the polyethylene pipe in the connecting nut, fit the locking ring over the polyethylene pipe, fit the O-ring presser ring over the polyethylene pipe, fit the O-ring on the pipe, and screw the body of the fitting onto the locking nut.

The sequence of operations must always be performed in order to avoid damaging the O-ring during the assembly operations, and with this embodiment also the approach between the nut and the body is not always easy due to the friction that is generated.

A common characteristic of known types of fittings is therefore that they are formed by a large number of components, four or five depending on the versions, and above all there is the great drawback of having to first of all disassemble the fitting in order to connect it to the pipe, with the risk of making mistakes during assembly and/or of losing components in difficult working conditions.

The aim of the invention is to eliminate the drawbacks noted above by providing a compression fitting, particularly for polyethylene pipes, with simplified connection, which allows to reduce the number of components.

Within this aim, an object of the invention is to provide a compression fitting in which the fitting can be connected to the polyethylene pipe without having to disassemble the components of the fitting.

Another object of the present invention is to provide a fitting which thanks to its particular constructive characteristics is capable of giving the greatest assurances of reliability and safety in use.

Still another object of the present invention is to provide a compression fitting, particularly for polyethylene pipes, with simplified connection which can be easily obtained starting from commonly commercially available elements and materials and is further competitive from a merely economical standpoint.

This aim and these and other objects which will become better apparent hereinafter are achieved by a compression fitting, particularly for polyethylene pipes, with simplified connection, according to the invention, which comprises a locking nut which can be coupled to a body of the fitting which ends either with a thread or with an identical compression locking system, means for locking the pipe to be connected and sealing means being further provided, characterized in that said locking means and said sealing means are provided by a single component.

Further characteristics and advantages of the present invention will become better apparent from the description of a preferred but not exclusive embodiment of a compression fitting, particularly for polyethylene pipes, with simplified connection, illustrated by way of non-limiting example in the accompanying drawings, wherein:
Figure 1 is an exploded perspective view of the compression fitting according to the present invention;
Figure 2 is an exploded sectional view of the fitting, taken along an axial plane;
Figure 3 is a view of the fitting in the assembled condition;
Figures 4 and 5 are schematic views of different embodiments of the locking means.

With reference to the figures, the compression fitting, particularly for polyethylene pipes, with simplified connection, generally designated by the reference numeral 1, comprises a locking nut 2, which forms internally an internal thread 3 for mating with a fitting body 4 which has the typical cuplike shape and forms a mating thread 5 in order to lock onto the thread 3.

The body of the fitting 4 further forms a connecting inlet 6, which is provided with an external connecting thread 7.

Such thread can be present also in the internal version (female thread), or the body can have two threads which are identical to the thread 5 so as to be able to compress polyethylene pipes both in input and in output with respect to the fitting. In this last case, one is dealing with a so-called double-ended fitting.

There is also the compression fitting in the tee version, with one or more compression ends and one or more threaded male/female ends.

The fitting further comprises means for locking the pipe to be connected and sealing means.

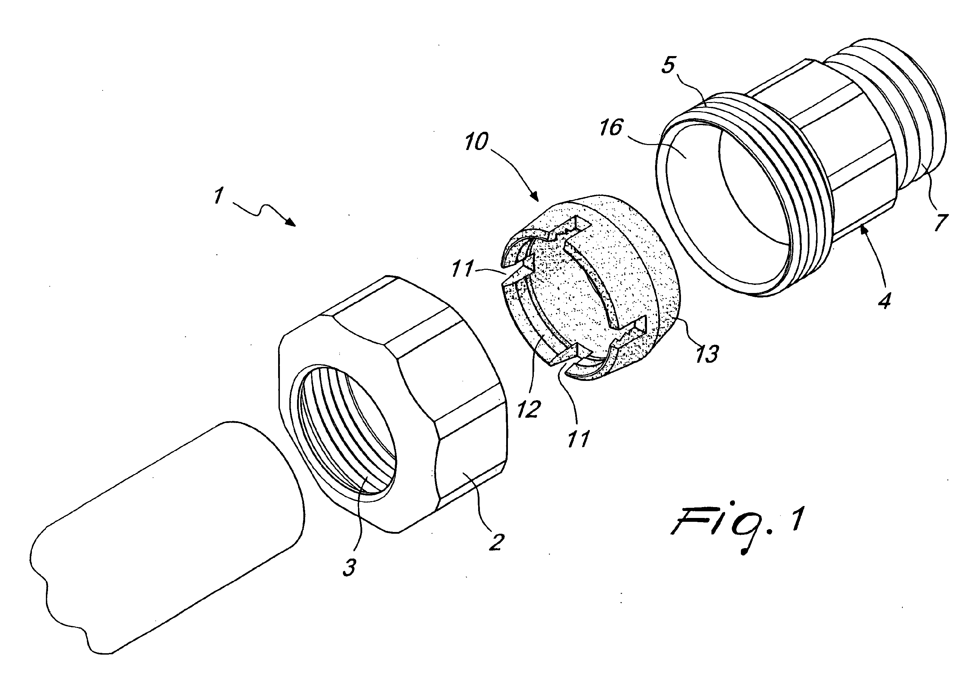

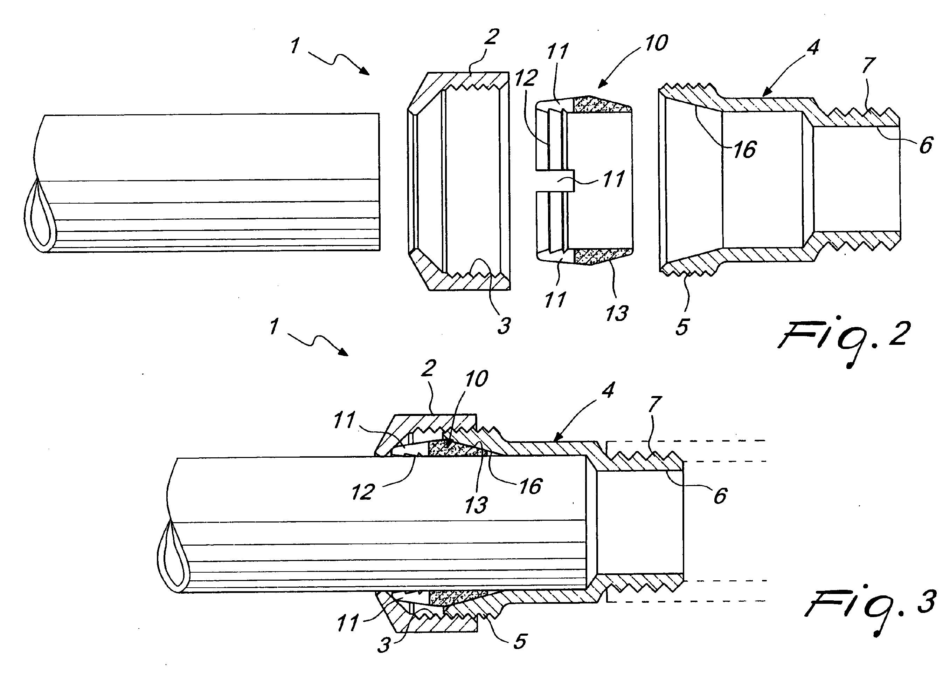

The peculiarity of the invention resides in that the locking means and the sealing means are provided by a single component, designated by the reference numeral 10, which as shown in Figures 1 to 3 can be made of a single material and forms, from one end, notches 11 on a toothed region 12 which allow locking onto the polyethylene pipe when the nut 2 is screwed onto the body 4.

Moreover, the single component 10 forms a gasket portion 13 which tapers and engages the frustum-shaped internal surface 16 of the body 4 of the fitting.

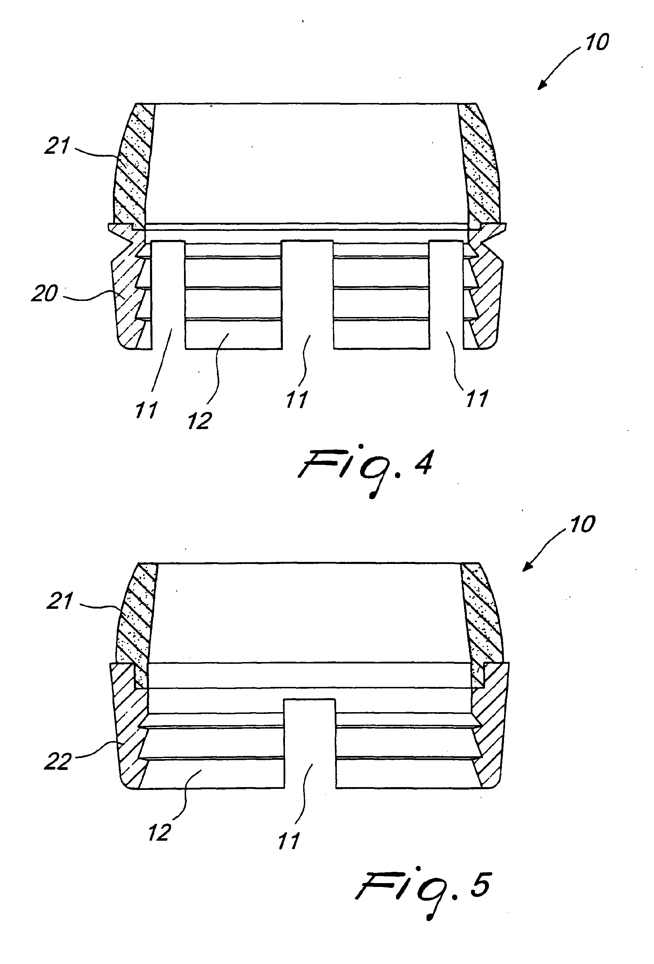

As clearly shown in Figure 4, it is possible to provide a component 10 which is provided with a locking portion, designated by the reference numeral 20, which is made of metallic material, such as brass and the like, and is connected to gasket means obtained by a rubber component designated by the reference numeral 21.

The locking portion 20 and the gasket means 21 are mutually preassembled and are in practice a single component.

According to the embodiment shown in Figure 5, it is possible to provide locking means 22 made of plastic material or nonmetallic material which are stably connected to sealing means, which are made of rubber and are again designated by the reference numeral 21.

The peculiarity of the invention resides in that the single component combines within itself the function of a gasket and the function of a pipe compression ring, thus allowing to make assembly particularly easy.

The fitting according to the invention allows to perform mating with the polyethylene pipe without having to disassemble the fitting beforehand, since damage to the sealing means is prevented due to the fact that the pipe itself is guided by the ring, which is monolithic with the gasket.

Moreover, the single component can be provided with diameters which are selected specifically for each diameter of the polyethylene pipe.

From what has been described above it is therefore evident that the invention achieves the intended aim and objects and in particular the fact is stressed that a compression fitting is provided which allows to perform coupling to the polyethylene pipe without having to first disassemble the fitting, with the additional advantage that said fitting is provided by means of just three components, since the single component is capable of performing the locking and sealing function.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements.

The disclosures in Italian Patent Application No. MI2006A001109 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A compression fitting (1), particularly for polyethylene pipes, with simplified connection, comprising a locking nut (2) which can be coupled to a body (4) of the fitting which forms a connecting thread (3), means (20; 22) for locking the pipe to be connected and sealing means (21) being further provided, **characterized in that** said locking means (20; 22) and said sealing means (21) are provided by a single component (10).

2. The fitting according to claim 1, **characterized in that** said single component (10) is made of a single material.

3. The fitting according to the preceding claims, **characterized in that** said single component (10) forms sealing means (21) made of rubber or similar materials and locking means (20) made of metallic material.

4. The fitting according to one or more of the preceding claims, **characterized in that** said single component (10) forms said sealing means (21) made of rubber or similar materials and said locking means (22) made of nonmetallic material.

5. The fitting according to one or more of the preceding claims, **characterized in that** the polyethylene pipe can be inserted in the fitting (1) while the fitting is assembled.

6. The fitting according to one or more of the preceding claims, **characterized in that** said single component (10) forms an inside diameter which corresponds to the polyethylene pipe onto which it is to be mated.
